# FASCICULE DE BREVET EUROPEEN

(11) **EP 4 091 906 B1**
(45) Date de publication et mention de la délivrance du brevet: **25.12.2024**
(21) Numéro de dépôt: 22173878.4
(22) Date de dépôt: 17.05.2022
(51) Int. Cl.: B62B 7/04, B62B 7/08, B62B 9/10, B62B 9/24, B62J 27/00, B62K 9/02, B62K 21/16

(54) **VÉHICULE POUR ENFANT**
FAHRZEUG FÜR KINDER
VEHICLE FOR A CHILD

(30) Priorité: 18.05.2021 FR 2105143
(43) Date de publication de la demande: 23.11.2022
(73) Titulaire: ID Development Limited, Hong Kong (HK)
(72) Inventeur: MAZOYER, Joseph, 69007 Lyon (FR); BAJARD, Philippe, 69005 Lyon (FR)
(74) Mandataire: LLR

(56) Documents cités:
- EP-A1- 3 333 057
- CN-A- 112 498 460
- CN-U- 203 681 626

## Description

L'invention concerne le domaine technique des véhicules pour enfants, et notamment le domaine des véhicules transformables pour petits enfants.

Les véhicules transformables peuvent être utilisés dans au moins deux configurations distinctes.

On connaît déjà dans l'état la technique des véhicules pour enfants, par exemple des tricycles, comprenant un siège sur lequel est monté un élément de sécurité pour entourer le corps d'un enfant. L'élément de sécurité permet notamment d'éviter une éventuelle chute de l'enfant hors du siège. Ce type de véhicule comprend encore un guidon destiné à être saisi par l'enfant, avec ou sans la possibilité de contrôler la direction du véhicule.

Les documents CN 11249860 A, CN 203681626 U et EP 3333057 A1 divulguent des véhicules pour enfants orientables dotés d'un élément de protection pour sécuriser l'enfant.

Toutefois, le véhicule pour enfant tel que connu de l'état de la technique a pour défaut d'avoir un encombrement très important lorsque le véhicule est en fonctionnement et/ou rangé.

Un but de l'invention est de fournir un véhicule pour enfant compact tout en procurant une bonne protection de l'enfant.

A cet effet l'invention est définie par la revendication 1 et a pour objet un véhicule pour enfant comprenant un corps de véhicule sur lequel sont montés :
- une roue avant et au moins une roue arrière,
- un sous-ensemble de direction comprenant une colonne de direction liée à la roue avant et un guidon,
- un siège configuré pour recevoir un enfant,
- un élément de sécurité configuré pour entourer au moins une première zone de corps de l'enfant lorsqu'il est installé sur le siège,
le guidon étant amovible entre :
- une première configuration dans laquelle le guidon est éloigné de l'élément de sécurité et
- une seconde configuration dans laquelle le guidon est rapproché de l'élément de sécurité et entoure une seconde zone de corps de l'enfant.

On entend par « guidon » un tube muni de poignées commandant la direction du véhicule, ou au moins comprenant deux branches agencées de part et d'autre de la colonne de direction.

On comprend que le véhicule est un véhicule transformable. Il peut prendre deux configurations opérationnelles distinctes, c'est à dire deux configurations différentes du véhicule, utilisées par l'enfant alors qu'il est installé sur le véhicule.

On comprend que dans la première configuration, le guidon n'entoure pas la seconde zone du corps de l'enfant.

Les deux différentes configurations du guidon permettent d'utiliser un seul élément pour assurer la fonction de guidage du véhicule et la fonction de protection de l'enfant. En effet, lorsque le guidon est dans la première configuration, le véhicule est mieux adapté à un enfant qui est capable d'utiliser le guidon pour contrôler la direction du véhicule en déplacement ; lorsque le guidon est dans la seconde configuration, le véhicule est mieux adapté à un enfant à bas âge nécessitant une protection corporelle permettant d'éviter toute chute possible de l'enfant hors du siège. Le guidon qui assure ces deux fonctions rend l'ensemble du véhicule compact et réduit le nombre de pièces nécessaires à la fabrication du véhicule.

Suivant d'autres caractéristiques optionnelles de l'invention, prises seules ou en combinaison :
- Le véhicule pour enfant comprend des moyens de fixation configurés pour relier le guidon et l'élément de sécurité, de sorte qu'ils délimitent un espace fermé dans la seconde configuration.

De ce fait, l'enfant assis sur le siège est mieux protégé d'une éventuelle chute.
- Les moyens de fixation comprennent une protubérance et une cavité configurée pour recevoir la protubérance par encliquetage, la protubérance et la cavité étant agencées l'une sur le guidon et l'autre sur l'élément de sécurité.
- Le guidon comprend deux branches agencées de part et d'autre de la colonne de direction, chaque branche étant montée rotative autour d'un axe de rotation sensiblement perpendiculaire à la colonne de direction.
- Les axes de rotation des branches sont normaux à des plans sécants entre eux.

Chaque branche forme donc avec le plan médian du véhicule un angle non droit. Ceci permet de rapprocher les branches vers l'élément de sécurité dans la seconde configuration du guidon. De plus, les branches peuvent être agencées de manière à ce qu'elles soient plus proches du corps de l'enfant pour que celui-ci puisse les saisir avec ses mains.
- Le guidon est monté rotatif sur la colonne de direction autour d'un axe de rotation vertical, l'axe de rotation vertical étant inclus dans le plan de symétrie du corps de véhicule.

Pour ce faire, le guidon peut présenter une forme permettant les deux configurations. Par exemple, le guidon peut avoir une forme de demi-cercle ou de croissant.
- Le véhicule pour enfant comprend un bouton de verrouillage configuré pour verrouiller le guidon dans la première configuration ou dans la seconde configuration.

Le bouton de verrouillage peut être, par exemple, un bouton poussoir agencé de manière à ce que le mouvement du guidon soit autorisé lorsque le bouton est actionné et à ce que le mouvement du guidon soit verrouillé lorsque le bouton est relâché.
- Le véhicule pour enfant comprend un dossier relié au siège, l'élément de sécurité comprenant deux bras ayant une forme d'arc agencés de part et d'autre du dossier, chaque bras comprenant une extrémité pourvue d'une protubérance.
- L'élément de sécurité est monté rotatif sur le dossier autour d'un axe de rotation horizontal, l'élément de sécurité étant mobile entre une position de sécurité et une position escamotée.

On comprend que la position de sécurité est une position où l'élément de sécurité est capable de former un espace fermé avec le guidon et que la position escamotée est une position où l'élément de de sécurité est sensiblement dans le plan du dossier.

La rotation de l'élément de sécurité est réalisée, par exemple, par une liaison à rotule.
- L'élément de sécurité est détachable du véhicule pour un meilleur compacité du véhicule lorsqu'il est rangé, par exemple, par pliage du dossier vers le siège.

### Brève description des figures

L'invention sera mieux comprise à la lecture de la description qui va suivre donnée uniquement à titre d'exemple et faite en se référant aux dessins annexés, dans lesquels :
[Fig. 1] la figure 1 est une vue en perspective d'un véhicule pour enfant comprenant un guidon dans la seconde configuration ;
[Fig. 2] la figure 2 est une vue en perspective d'une partie du véhicule pour enfant de la figure 1 ;
[Fig. 3] la figure 3 est une vue en perspective d'une autre partie du véhicule pour enfant de la figure 1 ;
[Fig. 4] la figure 4 est une vue en perspective d'un détail du guidon.

### Description détaillée

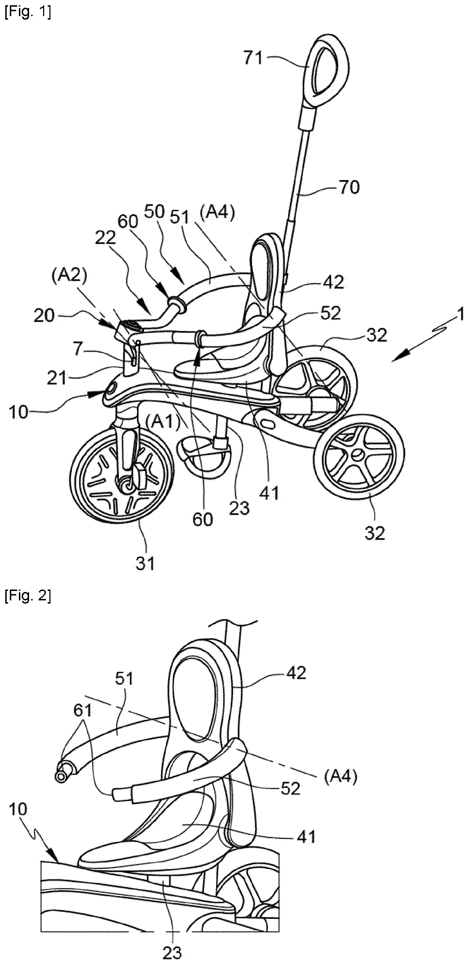

On a représenté sur les figures 1 à 4 un véhicule pour enfant, désigné par la référence générale 1, selon un mode de réalisation de l'invention. Le véhicule comprend un corps de véhicule 10 sur lequel sont montés une roue avant 31 et deux roues arrière 32 pour former un tricycle. Un sous-ensemble de direction 20 est agencé à l'avant du véhicule et comprend une colonne de direction 21 liée à la roue avant 31 et un guidon 22. Le véhicule pour enfant 1 comprend en outre une tige 70 de manoeuvre qui est placée à l'arrière du véhicule. La tige 70 comprend une poignée de contrôle 11 du véhicule par un adulte accompagnateur. La tige 70 est engagée dans un logement disposé à l'arrière du corps de véhicule 10.

Comme illustré aux figures 1 et 2, le véhicule comprend un siège 41 dimensionné pour recevoir un enfant, le siège 41 étant relié au corps de véhicule 10 par un tube de montage 21 traversant un trou disposé sur le corps de véhicule 10. Un dossier 42 est monté rotatif par rapport au siège 41 et comprend un élément de sécurité 50 constitué de deux bras 51, 52 ayant une forme d'arc agencés de part et d'autre du dossier 42. Ainsi, les bras 51, 52 sont capable d'entourer une première zone de corps de l'enfant, par exemple une zone englobant le dos et les côtes de l'enfant, lorsqu'il est installé sur le siège 41.

Dans ce mode de réalisation illustré, les bras 51, 52 sont montés rotatifs sur le dossier 42 autour d'un axe de rotation horizontal (A4) et mobiles entre une position de sécurité, tel que visible aux figures 1 et 2, et une position escamotée où les bras 51, 52 sont tournés autour de l'axe de rotation horizontal (A4) jusqu'à ce qu'ils soient sensiblement parallèles au dossier 42.

Les figures 1, 3 et 4 illustrent un exemple de réalisation du guidon 22 comprenant deux branches 221, 222 agencées de part et d'autre de la colonne de direction 21. Chaque branche 221, 222 est montée rotative autour d'un axe de rotation (A1, A2) sensiblement perpendiculaire à la colonne de direction 21. Par ailleurs, les axes de rotation (A1, A2) sont normaux à des plans sécants entre eux. De ce fait, le guidon 22 formé par l'ensemble des branches 221, 222 est amovible entre deux configurations différentes.

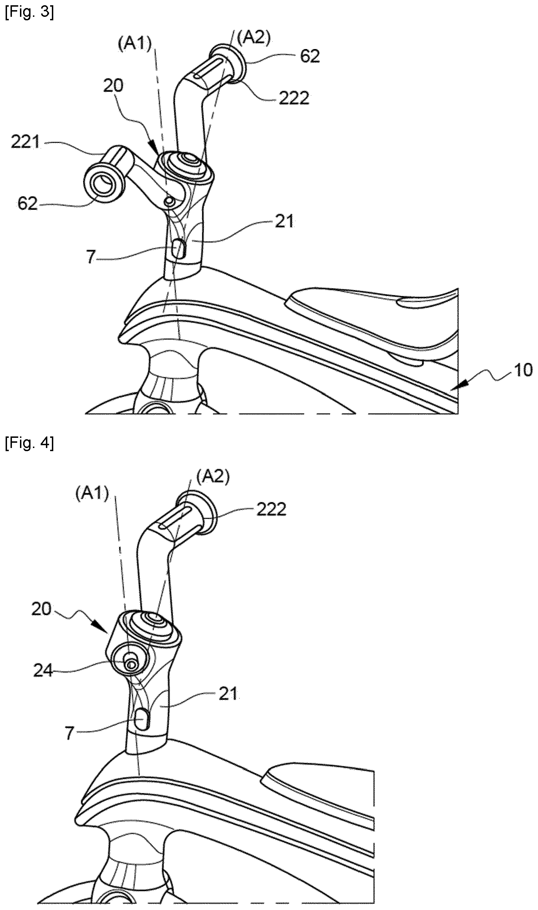

Les figures 3 et 4 illustrent une première configuration dans laquelle les branches 221, 222 sont éloignées des bras 51, 52 et prennent forme d'un guidon connu de l'état de la technique ; La figure 1 illustre une seconde configuration dans laquelle les branches 221, 222 sont tournées autour de leurs axes de rotation (A1, A2) jusqu'à une position où les branches 221, 222 sont rapprochées des bras 51, 52 pour former avec ces derniers une boucle fermée pour entourer complètement le corps de l'enfant.

Dans le but de maintenir le guidon 22 dans la seconde configuration, le véhicule pour enfant 1 comprend des moyens de fixation 60 du guidon 22 par rapport à l'élément de sécurité 50. Dans l'exemple illustré, chaque branche 221, 222 comprend une extrémité pourvue d'une cavité 62 destinée à coopérer avec une protubérance 61 agencée sur l'extrémité du bras correspondant. D'autres moyens de fixation sont également envisageables dans la mesure où la connexion et la dissociation du guidon 22 par rapport à l'élément de sécurité 50 puisse se faire de façon aisée et rapide par un parent.

Par ailleurs, un bouton de verrouillage 7 est agencé sur la colonne de direction 21, tel que visible aux figures 1, 3 et 4, pour verrouiller le guidon 22 dans la première configuration ou dans la seconde configuration.

Enfin, chaque branche 221, 222 du guidon 22 est montée sur un axe métallique 24, tel que visible à la figure 4, pour solidifier la liaison entre les branches et la colonne de direction 21.

L'invention n'est pas limitée aux modes de réalisation présentés et d'autres modes de réalisation apparaîtront clairement à l'homme du métier. Notamment, dans un autre mode de réalisation, le guidon est monté rotatif sur la colonne de direction autour d'un axe de rotation vertical, l'axe de rotation vertical étant inclus dans le plan de symétrie du corps de véhicule. Il est également possible de rendre l'élément de sécurité 50 détachable du véhicule. L'invention est définie uniquement par la revendication 1. Des modes de réalisation préférés sont définis dans les revendications dépendantes.

### Liste de références

1 : véhicule pour enfant
7 : bouton de verrouillage
10 : corps de véhicule
20 : sous-ensemble de direction
21 : colonne de direction
22 : guidon
23 : tube de montage
24 : axe métallique
31 : roue avant
32 : roue arrière
41 : siège
42 : dossier
50 : élément de sécurité
51, 52 : bras
60 : moyens de fixation
61 : protubérance
62 : cavité
70 : tige
71 : poignée de contrôle
221, 222 : branche
A1, A2 : axe de rotation
A4 : axe de rotation horizontal

## Revendications

1. Véhicule pour enfant comprenant un corps de véhicule (10) sur lequel sont montés
- une roue avant (31) et au moins une roue arrière (32),
- un sous-ensemble de direction (20) comprenant une colonne de direction (21) liée à la roue avant (31) et un guidon (22),
- un siège (41) configuré pour recevoir un enfant,
- un élément de sécurité (50) configuré pour entourer au moins une première zone de corps de l'enfant lorsqu'il est installé sur le siège (41),
**caractérisé en ce que**
le guidon (22) étant amovible entre :
- une première configuration dans laquelle le guidon (22) est éloigné de l'élément de sécurité (50) et
- une seconde configuration dans laquelle le guidon (22) est rapproché de l'élément de sécurité (50) et entoure une seconde zone de corps de l'enfant.

2. Véhicule pour enfant selon la revendication précédente comprenant des moyens de fixation (60) configuré pour relier le guidon (22) et l'élément de sécurité (50) de sorte qu'ils délimitent un espace fermé dans la seconde configuration.

3. Véhicule pour enfant selon la revendication précédente dans lequel les moyens de fixation (60) comprennent une protubérance (61) et une cavité (62) configurée pour recevoir la protubérance (61) par encliquetage, la protubérance (61) et la cavité (62) étant agencées l'une sur le guidon (22) et l'autre sur l'élément de sécurité (50).

4. Véhicule pour enfant selon l'une quelconque des revendications précédentes dans lequel le guidon (22) comprend deux branches (221, 222) agencées de part et d'autre de la colonne de direction (21), chaque branche (221 , 222) étant montée rotative autour d'un axe de rotation (A1, A2) sensiblement perpendiculaire à la colonne de direction (21).

5. Véhicule pour enfant selon la revendication précédente dans lequel les axes de rotation (A1, A2) des branches (221, 222) sont normaux à des plans sécants entre eux.

6. Véhicule pour enfant selon l'une des revendications 1 à 3 dans lequel le guidon (22) est monté rotatif sur la colonne de direction (21) autour d'un axe de rotation vertical, l'axe de rotation vertical étant inclus dans le plan de symétrie du corps de véhicule (1).

7. Véhicule pour enfant selon l'une quelconque des revendications précédentes comprenant un bouton de verrouillage (7) configuré pour verrouiller le guidon (22) dans la première configuration ou dans la seconde configuration.

8. Véhicule pour enfant selon l'une quelconque des revendications 3 à 7 comprenant un dossier (42) relié au siège (41), l'élément de sécurité (50) comprenant deux bras (51, 52) ayant une forme d'arc agencés de part et d'autre du dossier (42), chaque bras (51, 52) comprenant une extrémité pourvue d'une protubérance (61).

9. Véhicule pour enfant selon la revendication précédente dans lequel l'élément de sécurité (50) est monté rotatif sur le dossier (42) autour d'un axe de rotation horizontal (A4), l'élément de sécurité (50) étant mobile entre une position de sécurité et une position escamotée.

10. Véhicule pour enfant selon l'une quelconque des revendications précédentes dans lequel l'élément de sécurité (50) est détachable du véhicule.

## Patentansprüche

1. Fahrzeug für Kinder, umfassend einen Fahrzeugkörper (10), an dem gelagert sind
- ein Vorderrad (31) und wenigstens ein Hinterrad (32),
- eine Lenkbaugruppe (20), umfassend eine Lenksäule (21), die mit dem Vorderrad (31) verbunden ist, und einen Lenker (22),
- einen Sitz (41), der dazu ausgebildet ist, ein Kind aufzunehmen,
- ein Sicherheitselement (50), das dazu ausgebildet ist, wenigstens eine erste Körperzone des Kindes zu umgeben, wenn es auf den Sitz (41) gesetzt ist,
**dadurch gekennzeichnet, dass** der Lenker (22) herausziehbar ist zwischen:
- einer ersten Konfiguration, in der der Lenker (22) von dem Sicherheitselement (50) entfernt ist, und
- einer zweiten Konfiguration, in der der Lenker (22) dem Sicherheitselement (50) genähert ist und eine zweite Körperzone des Kindes umgibt.

2. Fahrzeug für Kinder, nach dem vorhergehenden Anspruch, umfassend Befestigungsmittel (60), die dazu ausgebildet sind, den Lenker (22) und das Sicherheitselement (50) so zu verbinden, dass sie in einen in der zweiten Konfiguration geschlossenen Raum begrenzen.

3. Fahrzeug für Kinder, nach dem vorhergehenden Anspruch, wobei die Befestigungsmittel (60) eine Ausstülpung (61) und eine Vertiefung (62), die dazu ausgebildet ist, die Ausstülpung (61) durch Einrasten aufzunehmen, umfassen, wobei die Ausstülpung (61) und die Vertiefung (62) die eine an dem Lenker (22) und die andere an dem Sicherheitselement (50) angeordnet sind.

4. Fahrzeug für Kinder, nach einem der vorhergehenden Ansprüche, wobei der Lenker (22) zwei Schenkel (221, 222) umfasst, die beiderseits der Lenksäule (21) angeordnet sind, wobei jeder Schenkel (221, 222) um eine Rotationsachse (A1, A2) drehbar gelagert ist, die zu der Lenksäule (21) im Wesentlichen senkrecht ist.

5. Fahrzeug für Kinder, nach dem vorhergehenden Anspruch, wobei die Rotationsachsen (A1, A2) der Schenkel (221, 222) die Normalen der Sekantenebene zwischen ihnen sind.

6. Fahrzeug für Kinder, nach einem der Ansprüche 1 bis 3, wobei der Lenker (22) an der Lenksäule (21) um eine vertikale Rotationsachse drehbar gelagert ist, wobei die vertikale Rotationsachse in der Symmetrieebene des Fahrzeugkörpers (1) liegt.

7. Fahrzeug für Kinder, nach einem der vorhergehenden Ansprüche, umfassend einen Verriegelungsknopf (7), der dazu ausgebildet ist, den Lenker (22) in der ersten Konfiguration oder in der zweiten Konfiguration zu verriegeln.

8. Fahrzeug für Kinder, nach einem der Ansprüche 3 bis 7, umfassend eine Rückenlehne (42), die mit dem Sitz (41) verbunden ist, wobei das Sicherheitselement (50) zwei Arme (51, 52) mit einer Bogenform umfasst, die beiderseits der Rückenlehne (42) angeordnet sind, wobei jeder Arm (51, 52) ein Ende umfasst, das mit einer Ausstülpung (61) versehen ist.

9. Fahrzeug für Kinder, nach dem vorhergehenden Anspruch, wobei das Sicherheitselement (50) an der Rückenlehne (42) um eine horizontale Rotationsachse (A4) drehbar gelagert ist, wobei das Sicherheitselement (50) zwischen einer Sicherheitsstellung und einer versenkten Stellung beweglich ist.

10. Fahrzeug für Kinder, nach einem der vorhergehenden Ansprüche, wobei das Sicherheitselement (50) von dem Fahrzeug abnehmbar ist.

## Claims

1. Vehicle for children comprising a vehicle body (10) on which are mounted
- a front wheel (31) and at least one rear wheel (32),
- a steering sub-assembly (20) comprising a steering column (21) linked to the front wheel (31) and a handlebar (22),
- a seat (41) configured to accommodate a child,
- a safety element (50) configured to surround at least a first area of the child's body when it is installed on the seat (41),
**characterized in that**
the handlebar (22) being removable between:
- a first configuration in which the handlebar (22) is remote from the safety element (50), and
- a second configuration in which the handlebar (22) is close to the safety element (50) and surrounds a second area of the child's body.

2. Children's vehicle according to the preceding claim, comprising attachment means (60) configured to connect the handlebar (22) and the safety element (50), so that they delimit a closed space in the second configuration.

3. Children's vehicle according to the preceding claim, wherein the attachment means (60) comprise a protuberance (61) and a cavity (62) configured to receive the protuberance (61) by snap-fastening, the protuberance (61) and the cavity (62) being arranged one on the handlebar (22) and the other on the safety element (50).

4. Children's vehicle according to one of the preceding claims, wherein the handlebar (22) comprises two branches (221, 222) arranged on either side of the steering column (21), each branch (221, 222) being rotatably mounted about an axis of rotation (A1, A2) substantially perpendicular to the steering column (21).

5. Children's vehicle according to the preceding claim, wherein the axes of rotation (A1, A2) of the branches (221, 222) are normal to planes that intersect one another.

6. Children's vehicle according to one of claims 1 to 3, wherein the handlebar (22) is rotatably mounted on the steering column (21) about a vertical axis of rotation, the vertical axis of rotation being included in the plane of symmetry of the vehicle body (1).

7. Children's vehicle according to one of the preceding claims, comprising a lock button (7) configured to lock the handlebar (22) in the first configuration or in the second configuration.

8. Children's vehicle according to one of claims 3 to 7, comprising a backrest (42) connected to the seat (41), the safety element (50) comprising two arms (51, 52) having the shape of an arc arranged on either side of the backrest (42), each arm (51, 52) comprising an end provided with a protuberance (61).

9. Children's vehicle according to the preceding claim, wherein the safety element (50) is rotatably mounted on the backrest (42) about a horizontal axis of rotation (A4), the safety element (50) being movable between a safety position and a retracted position.

10. Children's vehicle according to one of the preceding claims, wherein the safety element (50) is detachable from the vehicle.
